# EUROPEAN PATENT APPLICATION

(11) **EP 3 136 214 A1**
(43) Date of publication of application: **01.03.2017**
(21) Application number: 14893384.9
(22) Date of filing: 26.05.2014
(51) Int. Cl.: G06F 3/0488

(54) **TOUCH OPERATION METHOD AND APPARATUS FOR TERMINAL**

(71) Applicant: Huawei Technologies Co. Ltd., Shenzhen, Guangdong 518129 (CN)
(72) Inventor: XIA, Zhonglin, Shenzhen Guangdong 518129 (CN)
(74) Representative: Maiwald Patentanwalts GmbH
(86) International application number: PCT/CN2014/078405
(87) International publication number: WO 2015/180013

(57) **Abstract**

The present invention is applicable to the field of terminal technologies, and provides a touch operation method and apparatus for a terminal. The method includes: acquiring a touch gesture entered by a user on a screen; loading a display control in a first screen area corresponding to the touch gesture; loading a display interface of a second screen area onto the display control, where at least some different interface elements exist in a display interface of the first screen area and the display interface of the second screen area; and acquiring an operation instruction entered by the user on the display control, and operating, on the display control, the display interface of the second screen area according to the operation instruction. In a scenario in which a user operates and controls a large-touchscreen terminal by using one hand, the present invention can effectively improve touch operation efficiency on the terminal.

## Description

### TECHNICAL FIELD

The present invention relates to the field of terminal technologies, and in particular, to a touch operation method and apparatus for a terminal.

### BACKGROUND

As smartphones are widely applied to various aspects of users' work, study, and entertainment life, both the users and markets impose a higher requirement for a hardware level of the smartphones. Subjecting to the foregoing market requirement, a large-screen mobile phone is increasingly welcomed by enormous consumers for its larger viewing angle and better detail display effect, and market share of smartphones whose screens are larger than 5 inches is greatly increased.

In many application scenarios, a user can hold a smartphone only by using one hand, and perform a touch operation on the smartphone by using only the thumb of the hand. Therefore, when a screen of a smartphone reaches a particular size, a screen area that can be flexibly operated in the foregoing manner is quite limited, which undoubtedly reduces efficiency for operating the smartphone.

### SUMMARY

An objective of embodiments of the present invention is to provide a touch operation method for a terminal, which resolves a current problem of low touch operation efficiency on a large-screen terminal.

According to a first aspect, a touch operation method for a terminal is provided, including: acquiring a touch gesture entered by a user on a screen; loading a display control in a first screen area corresponding to the touch gesture; loading a display interface of a second screen area onto the display control, where at least some different interface elements exist in a display interface of the first screen area and the display interface of the second screen area; and acquiring an operation instruction entered by the user on the display control, and operating, on the display control, the display interface of the second screen area according to the operation instruction.

In a first possible implementation manner of the first aspect, the loading a display control in a first screen area corresponding to the touch gesture further includes: loading a function key related to the display control on the screen.

With reference to the first aspect or the first possible implementation manner of the first aspect, in a second possible implementation manner, the method further includes: acquiring a switch instruction entered by the user on the display control; and switching, according to the switch instruction, the display interface that is of the second screen area and is loaded onto the display control to a display interface of a third screen area.

With reference to the second possible implementation manner of the first aspect, in a third possible implementation manner, the switch instruction includes an instruction triggered by a flicking gesture, and the switching, according to the switch instruction, the display interface that is of the second screen area and is loaded onto the display control to a display interface of a third screen area includes: acquiring a flicking direction of the flicking gesture; and switching, according to the instruction triggered by the flicking gesture, the display interface that is of the second screen area and is loaded onto the display control to the display interface of the third screen area, where the display interface of the third screen area is a preset interface, in the flicking direction, of the display interface of the second screen area.

With reference to the second possible implementation manner of the first aspect, in a fourth possible implementation manner, the switch instruction includes an instruction triggered by a tapping gesture, and the switching, according to the switch instruction, the display interface that is of the second screen area and is loaded onto the display control to a display interface of a third screen area includes: acquiring tapping coordinates of the tapping gesture, and determining the display interface of the third screen area by using the tapping coordinates of the tapping gesture as a center; and switching the display interface that is of the second screen area and is loaded onto the display control to the determined display interface of the third screen area.

With reference to the first aspect or the first possible implementation manner of the first aspect, in a fifth possible implementation manner, the method further includes: acquiring a zoom-out instruction entered by the user on the display control; and switching, according to the zoom-out instruction, the display interface that is of the second screen area and is loaded onto the display control to a display interface of a fourth screen area, where the display interface of the fourth screen area includes interface elements in the display interface of the second screen area, and a quantity of interface elements in the display interface of the fourth screen area is greater than a quantity of interface elements in the display interface of the second screen area; or acquiring a zoom-in instruction entered by the user on the display control; and switching, according to the zoom-in instruction, the display interface that is of the second screen area and is loaded onto the display control to a display interface of a fifth screen area, where the display interface of the fifth screen area includes only a part of interface elements in the display interface of the second screen area.

With reference to the first aspect or any possible implementation manner of the first aspect, in a sixth possible implementation manner, the acquiring an operation instruction entered by the user on the display control, and operating, on the display control, the display interface of the second screen area according to the operation instruction includes: establishing a coordinate mapping relationship between the display interface loaded onto the display control and a display interface of the screen; acquiring the operation instruction entered by the user on the display control, and determining first entered coordinates, in the display interface loaded onto the display control, of the operation instruction; determining second entered coordinates in the display interface of the screen according to the coordinate mapping relationship and the first entered coordinates; and executing the operation instruction at the second entered coordinates in the display interface of the screen.

According to a second aspect, a touch operation apparatus for a terminal is provided, including: a first acquisition unit, configured to acquire a touch gesture entered by a user on a screen; a load unit, configured to load a display control in a first screen area corresponding to the touch gesture; a loading unit, configured to load a display interface of a second screen area onto the display control, where at least some different interface elements exist in a display interface of the first screen area and the display interface of the second screen area; and an operation unit, configured to: acquire an operation instruction entered by the user on the display control, and operate, on the display control, the display interface of the second screen area according to the operation instruction.

In a first possible implementation manner of the second aspect, the load unit is further configured to: load a function key related to the display control on the screen.

With reference to the second aspect or the first possible implementation manner of the second aspect, in a second possible implementation manner, the apparatus further includes: a second acquisition unit, configured to acquire a switch instruction entered by the user on the display control; and a switch unit, configured to switch, according to the switch instruction, the display interface that is of the second screen area and is loaded onto the display control to a display interface of a third screen area.

With reference to the second possible implementation manner of the second aspect, in a third possible implementation manner, the switch instruction includes an instruction triggered by a flicking gesture, and the switch unit is specifically configured to: acquire a flicking direction of the flicking gesture; and switch, according to the instruction triggered by the flicking gesture, the display interface that is of the second screen area and is loaded onto the display control to the display interface of the third screen area, where the display interface of the third screen area is a preset interface, in the flicking direction, of the display interface of the second screen area.

With reference to the second possible implementation manner of the second aspect, in a fourth possible implementation manner, the switch instruction includes an instruction triggered by a tapping gesture, and the switch unit is specifically configured to: acquire tapping coordinates of the tapping gesture, and determine the display interface of the third screen area by using the tapping coordinates of the tapping gesture as a center; and switch the display interface that is of the second screen area and is loaded onto the display control to the determined display interface of the third screen area.

With reference to the second aspect or the first possible implementation manner of the second aspect, in a fifth possible implementation manner, the apparatus further includes: a third acquisition unit, configured to acquire a zoom-out instruction entered by the user on the display control; and a zoom-out unit, configured to switch, according to the zoom-out instruction, the display interface that is of the second screen area and is loaded onto the display control to a display interface of a fourth screen area, where the display interface of the fourth screen area includes interface elements in the display interface of the second screen area, and a quantity of interface elements in the display interface of the fourth screen area is greater than a quantity of interface elements in the display interface of the second screen area; or the apparatus further includes: a fourth acquisition unit, configured to acquire a zoom-in instruction entered by the user on the display control; and a zoom-in unit, configured to switch, according to the zoom-in instruction, the display interface that is of the second screen area and is loaded onto the display control to a display interface of a fifth screen area, where the display interface of the fifth screen area includes only a part of interface elements in the display interface of the second screen area.

With reference to the second aspect or any possible implementation manner of the second aspect, in a sixth possible implementation manner, the operation unit is specifically configured to: establish a coordinate mapping relationship between the display interface of the second screen area and a display interface of the screen; acquire the operation instruction entered by the user on the display control, and determine first entered coordinates, in the display interface of the second screen area, of the operation instruction; determine second entered coordinates in the display interface of the screen according to the coordinate mapping relationship and the first entered coordinates; and execute the operation instruction at the second entered coordinates in the display interface of the screen.

According to a third aspect, a touch operation apparatus for a terminal is provided, including: a processor, a memory, and a bus; where the processor and the memory communicate with each other by using the bus, the memory is configured to store a program, and the processor is configured to execute the program stored in the memory, where when the program is being executed, the processor is configured to: acquire a touch gesture entered by a user on a screen; load a display control in a first screen area corresponding to the touch gesture; load a display interface of a second screen area onto the display control, where at least some different interface elements exist in a display interface of the first screen area and the display interface of the second screen area; and acquire an operation instruction entered by the user on the display control, and operate, on the display control, the display interface of the second screen area according to the operation instruction.

In a first possible implementation manner of the third aspect, that the processor loads the display control in the first screen area corresponding to the touch gesture includes: the processor is configured to load a function key related to the display control on the screen.

With reference to the third aspect or the first possible implementation manner of the third aspect, in a second possible implementation manner, the processor is further configured to: acquire a switch instruction entered by the user on the display control; and switch, according to the switch instruction, the display interface that is of the second screen area and is loaded onto the display control to a display interface of a third screen area.

With reference to the second possible implementation manner of the third aspect, in a third possible implementation manner, the switch instruction includes an instruction triggered by a flicking gesture, and that the processor switches, according to the switch instruction, the display interface that is of the second screen area and is loaded onto the display control to the display interface of the third screen area includes: the processor is configured to: acquire a flicking direction of the flicking gesture; and switch, according to the instruction triggered by the flicking gesture, the display interface that is of the second screen area and is loaded onto the display control to the display interface of the third screen area, where the display interface of the third screen area is a preset interface, in the flicking direction, of the display interface of the second screen area.

With reference to the second possible implementation manner of the third aspect, in a fourth possible implementation manner, the switch instruction includes an instruction triggered by a tapping gesture, and that the processor switches, according to the switch instruction, the display interface that is of the second screen area and is loaded onto the display control to the display interface of the third screen area includes: the processor is configured to: acquire tapping coordinates of the tapping gesture, and determine the display interface of the third screen area by using the tapping coordinates of the tapping gesture as a center; and switch the display interface that is of the second screen area and is loaded onto the display control to the determined display interface of the third screen area.

With reference to the third aspect or the first possible implementation manner of the third aspect, in a fifth possible implementation manner, the processor is further configured to: acquire a zoom-out instruction entered by the user on the display control; and switch, according to the zoom-out instruction, the display interface that is of the second screen area and is loaded onto the display control to a display interface of a fourth screen area, where the display interface of the fourth screen area includes interface elements in the display interface of the second screen area, and a quantity of interface elements in the display interface of the fourth screen area is greater than a quantity of interface elements in the display interface of the second screen area; or the processor is further configured to: acquire a zoom-in instruction entered by the user on the display control; and switch, according to the zoom-in instruction, the display interface that is of the second screen area and is loaded onto the display control to a display interface of a fifth screen area, where the display interface of the fifth screen area includes a part of interface elements in the display interface of the second screen area.

With reference to the third aspect or any possible implementation manner of the third aspect, in a sixth possible implementation manner, that the processor acquires the operation instruction entered by the user on the display control, and operates, on the display control, the display interface of the second screen area according to the operation instruction includes: the processor is configured to: establish a coordinate mapping relationship between the display interface loaded onto the display control and a display interface of the screen; acquire the operation instruction entered by the user on the display control, and determine first entered coordinates, in the display interface loaded onto the display control, of the operation instruction; determine second entered coordinates in the display interface of the screen according to the coordinate mapping relationship and the first entered coordinates; and execute the operation instruction at the second entered coordinates in the display interface of the screen.

In the embodiments of the present invention, a display interface of another screen area except a partial area on a screen of a terminal is loaded and displayed in the partial area, so that an operation for the entire screen of the terminal is implemented by using the partial area. According to the embodiments of the present invention, touch operation efficiency on the terminal can be effectively improved in a scenario in which a user operates and controls a large-screen terminal by using one hand.

### BRIEF DESCRIPTION OF DRAWINGS

FIG. 1 is an implementation flowchart of a touch operation method for a terminal according to an embodiment of the present invention;
FIG. 2A is a schematic diagram of a preset touch gesture entered by a left hand according to an embodiment of the present invention;
FIG. 2B is a schematic diagram of a preset touch gesture entered by a right hand according to an embodiment of the present invention;
FIG. 3 is a specific implementation flowchart of S102 in a touch operation method for a terminal according to an embodiment of the present invention;
FIG. 4A is a schematic diagram of a display interface loaded onto a display control according to an embodiment of the present invention;
FIG. 4B is a schematic diagram of a display interface loaded onto a display control according to another embodiment of the present invention;
FIG. 5 is a specific implementation flowchart of S104 in a touch operation method for a terminal according to an embodiment of the present invention;
FIG. 6 is an implementation flowchart of a touch operation method for a terminal according to another embodiment of the present invention;
FIG. 7A is a schematic diagram of a display interface that exists before switching and is loaded onto a display control according to an embodiment of the present invention;
FIG. 7B is a schematic diagram of a display interface that is obtained after switching and is loaded onto a display control according to an embodiment of the present invention;
FIG. 8 is an implementation flowchart of a touch operation method for a terminal according to another embodiment of the present invention;
FIG. 9A is a schematic diagram of a zoom-out display interface loaded onto a display control according to an embodiment of the present invention;
FIG. 9B is a schematic diagram of a zoom-in display interface loaded onto a display control according to an embodiment of the present invention;
FIG. 10 is a structural block diagram of a touch operation apparatus for a terminal according to an embodiment of the present invention;
FIG. 11 is a structural block diagram of hardware of a touch operation apparatus for a terminal according to an embodiment of the present invention; and
FIG. 12 is a block diagram of a partial structure of a mobile phone related to a terminal according to an embodiment of the present invention.

### DESCRIPTION OF EMBODIMENTS

To make the objectives, technical solutions, and advantages of the present invention clearer and more comprehensible, the following further describes the present invention in detail with reference to the accompanying drawings and embodiments. It should be understood that the specific embodiments described herein are merely used to explain the present invention but are not intended to limit the present invention.

In the embodiments of the present invention, a display interface of another screen area except a partial area on a screen of a terminal is loaded and displayed in the partial area, so that an operation for the entire screen of the terminal is implemented by using the partial area. According to the embodiments of the present invention, touch operation efficiency on the terminal can be effectively improved in a scenario in which a user operates and controls a large-screen terminal by using one hand.

In the embodiments of the present invention, the terminal includes but is not limited to a terminal device, such as a mobile phone, a tablet computer, or a personal digital assistant (Personal Digital Assistant, PDA), that can be operated and controlled by receiving an instruction by means of a touchscreen, which is not described one by one in the subsequent embodiments.

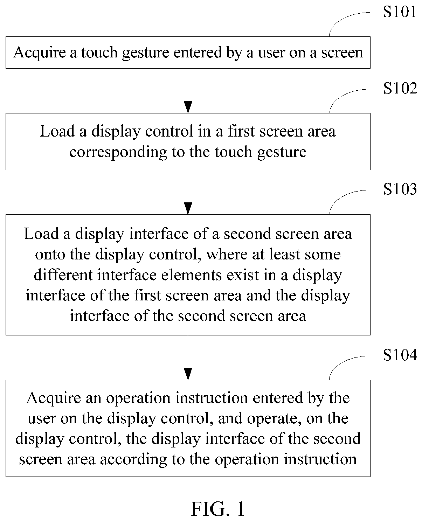

FIG. 1 shows an implementation procedure of a touch operation method for a terminal according to an embodiment of the present invention, and detailed descriptions are as follows:

In 101, acquire a touch gesture entered by a user on a screen.

In this embodiment, a gesture type of the touch gesture may be preset by a system, or may be defined by a user. The gesture type of the touch gesture needs to be different from a common touch gesture, so that after acquiring, by using a touch sensing apparatus built in the screen, the touch gesture entered by the user on the screen, the terminal can trigger an operation of loading a display control in a partial area on the screen.

In an embodiment of the present invention, the touch gesture may be further classified into a touch gesture entered by a left hand and a touch gesture entered by a right hand, so that the terminal determines, according to different touch gesture types, whether a current operation is performed by the left hand or the right hand of the user, and loads, according to different operation features or operation limitations of the left hand and the right hand, a display control in a screen area that is more suitable for a current operation condition.

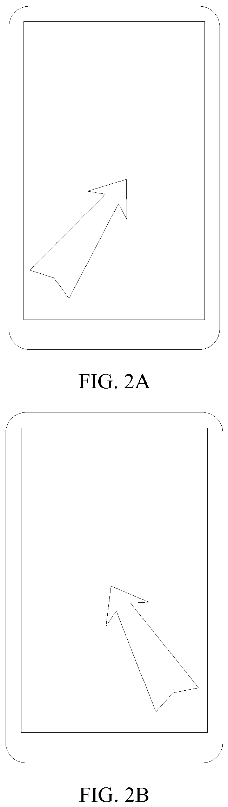

In an implementation example of the present invention, FIG. 2A shows a schematic diagram of a preset touch gesture entered by a left hand, and FIG. 2B shows a schematic diagram of a preset touch gesture entered by a right hand. It can be seen that with reference to the different operation features of the left hand and the right hand and a use habit of the user, and according to gesture types of the preset touch gestures, when the terminal detects an "left-upward" touch gesture on the screen, it is determined that a current operation is performed by a left hand, or when the terminal detects an "right-upward" touch gesture on the screen, it is determined that a current operation is performed by a right hand.

In 102, load a display control in a first screen area corresponding to the touch gesture.

In this embodiment, the preset touch gesture is corresponding to a partial screen area on the screen of the terminal, after the touch gesture that is entered on the screen is acquired in S101, the display control is loaded in the first screen area corresponding to the touch gesture. The display control is a display control overlaid on a current display interface of the screen of the terminal. The display control may be used as a display interface independent of the current display interface of the screen of the terminal, and a display interface of a part or all of a screen area on the current display interface of the screen of the terminal may be loaded onto the display control.

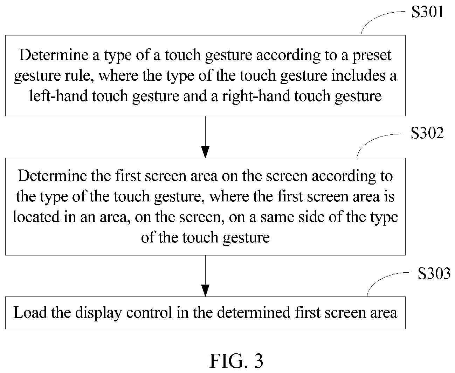

In an embodiment of the present invention, a loading position of the display control on the screen of the terminal may be further determined according to whether the touch gesture is performed by a left hand or a right hand of the user. As shown in FIG. 3, S102 is specifically as follows:

In S301, determine a type of the touch gesture according to a preset gesture rule, where the type of the touch gesture includes a left-hand touch gesture and a right-hand touch gesture.

In S302, determine the first screen area on the screen according to the type of the touch gesture, where the first screen area is located in an area, on the screen, on a same side of the type of the touch gesture. That is, when the touch gesture is the left-hand touch gesture, the first screen area is located in a left-side area on the screen; when the touch gesture is the right-hand touch gesture, the first screen area is located in a right-side area on the screen.

In S303, load the display control in the determined first screen area.

For example, in the preset gesture rule, if the touch gesture shown in FIG. 2A is set as the left-hand touch gesture, and the touch gesture shown in FIG. 2B is set as the right-hand touch gesture, when the left-hand touch gesture shown in FIG. 2A is acquired, the display control is loaded in a screen area suitable for operating and controlling by the left hand, or when the right-hand touch gesture shown in FIG. 2B is acquired, the display control is loaded in a screen area suitable for operating and controlling by the right hand, so as to ensure that the screen area in which the display control is loaded is a screen area that is most suitable for the current operation condition of the user.

In 103, load a display interface of a second screen area onto the display control, where at least some different interface elements exist in a display interface of the first screen area and the display interface of the second screen area. A display interface of the display control may include the different interface elements.

After the display control is loaded, the display interface of the second screen area is loaded onto the display control, so as to implement a display effect of overlay on the current display interface of the screen of the terminal. The first screen area and the second screen area may be separately two screen areas that do not completely overlap on the screen of the terminal, so as to implement a display effect of displaying a screen area 2 of the terminal in a screen area 1 of the terminal.

It should be noted that, in this embodiment, "first" in the first screen area and "second" in the second screen area are only used for distinguishing between different screen areas on a screen of a same terminal, and have no actual meaning. It can be easily figured out that at least some different interface elements exist in display interfaces of other screen areas (including "a third screen area", "a fourth screen area", and so on) mentioned in the subsequent embodiments, where the interface element includes but is not limited to display content such as an icon, a notification bar, a menu bar, and an operation key that are displayed on the screen of the terminal.

In this embodiment, according to the different preset touch gestures, positions, on the screen of the terminal, of the first screen area in which the display control is loaded are different, and positions, on the screen of the terminal, of the second screen area to which the display interface loaded onto the display control belongs are also different.

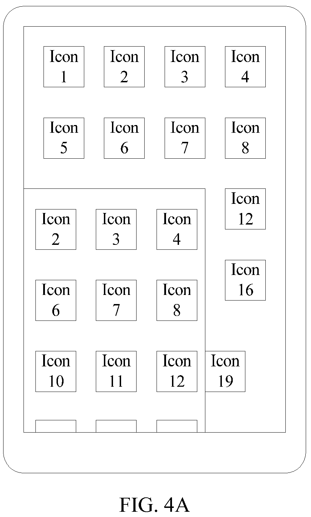

According to the different operation features or the operation limitations of the left hand and the right hand, when the touch gesture is the preset touch gesture entered by the left hand, because it is not convenient for the left hand to perform a touch operation on a right part of the screen, the first screen area may be located on a left part of the screen of the terminal, and the second screen area may be located on the right part of the screen of the terminal, so that the left hand can implement, on the left part of the screen of the terminal, an operation for the right part of the screen of the terminal in a convenient and comfortable manner. Preferably, the first screen area and the second screen area may be separately located in diagonally opposite areas on the screen of the terminal, so as to easily implement an operation for a diagonally opposite area that is most difficult to be operated by using one hand. As shown in FIG. 4A, the first screen area is located on a lower left part of the screen, and correspondingly, the second screen area is located on an upper right part of the screen, that is, a position that is diagonally opposite to the lower left part of the screen. Alternatively, in a case not shown in FIG. 4A, the first screen area is located on an upper left part of the screen, and correspondingly, the second screen area is located on a lower right part of the screen.

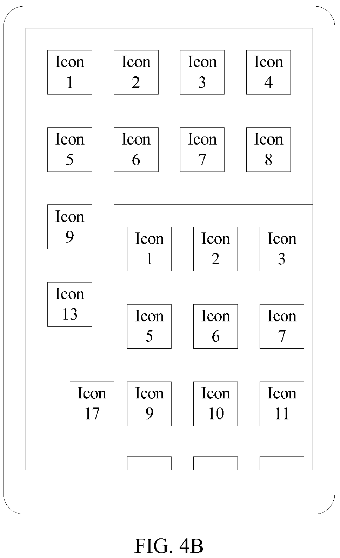

When the touch gesture is the preset touch gesture entered by the right hand, because it is not convenient for the right hand to perform a touch operation on a left part of the screen, the first screen area may be located on a right part of the screen of the terminal, and the second screen area may be located on the left part of the screen of the terminal, so that the right hand can implement, on the right part of the screen of the terminal, an operation for the left part of the screen of the terminal in a convenient and comfortable manner. Preferably, the first screen area and the second screen area may be separately located in diagonally opposite areas on the screen of the terminal, so as to easily implement an operation for a diagonally opposite area that is most difficult to be operated by using one hand. As shown in FIG. 4B, the first screen area is located on a lower right part of the screen, and correspondingly, the second screen area is located on an upper left part of the screen, that is, a position that is diagonally opposite to the lower right part of the screen. Alternatively, in a case not shown in FIG. 4B, the first screen area is located on an upper right part of the screen, and correspondingly, the second screen area is located on a lower left part of the screen.

Additionally, in a specific implementation example in this embodiment, for a size of an area occupied by each display control on a screen, reference may be referred to a size of an area that can be operated by a thumb in a case in which a user holds a terminal by using one hand. As shown in FIG. 4A and FIG. 4B, a default width of the display control is half a width of the screen of the terminal plus a width of a desktop icon, and a default height is half a height of the screen of the terminal plus a height of a desktop icon, so as to ensure maximization of the display control in an operable condition.

In an embodiment of the present invention, for a size of the display interface that is of the second screen area and is loaded onto the display control, by default, an original arrangement of the display interface of the second screen area may be maintained, that is, original screen resolution, an original icon size, and an original spacing between icons are maintained, to continue an original interface style of the screen of the terminal, so that the user can operate, according to a previous operation habit, the display interface loaded onto the display control, and operation efficiency is ensured.

In an embodiment of the present invention, at the same time when the display control is loaded in the first screen area corresponding to the touch gesture, a function key related to the display control may be further loaded on the screen of the terminal. The function key includes but is not limited to a key used to disable the display control, or a key used to perform an operation such as switching or zooming on the display interface loaded onto the display control. In this embodiment, a screen area in which the function key is located may also be related to the gesture type of the touch gesture, so that the function key can be corresponding, with full reference to the different operation features or the operation limitations of the left hand and the right hand, to a screen area that is most convenient for the left hand or the right hand to perform an operation. A loading position of the function key may be overlaid onto the display control; for example, the function key is disposed on an upper left corner of the display control, so as to help the user perform an operation by using the thumb of the left hand. It can be easily figured out that the loading position of the function key may also be overlaid in any screen area, on the entire screen of the terminal, which is convenient for a one-hand operation.

In 104, acquire an operation instruction entered by the user on the display control, and operate, on the display control, the display interface of the second screen area according to the operation instruction.

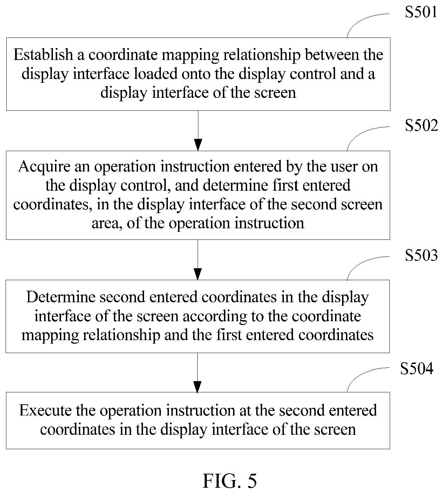

In this embodiment, when the display interface is loaded onto the display control, split-screen viewing of the screen of the terminal is implemented, and by acquiring the operation instruction entered by the user on the display control, a corresponding operation for the display interface that is of the second screen area and is loaded onto the display control can be performed on the display control in an existing operation manner of the terminal. As shown in FIG. 5, S104 is specifically as follows:

In S501, establish a coordinate mapping relationship between the display interface loaded onto the display control and a display interface of the screen.

In S502, acquire the operation instruction entered by the user on the display control, and determine first entered coordinates, in the display interface loaded onto the display control, of the operation instruction.

In S503, determine second entered coordinates in the display interface of the screen according to the coordinate mapping relationship and the first entered coordinates.

In S504, execute the operation instruction at the second entered coordinates in the display interface of the screen.

For example, as shown in FIG. 4A, if the upper left corner of the screen of the terminal is used as a coordinate origin (0, 0), and starting from the coordinate origin, an upper edge and a left edge of the screen of the terminal are respectively used as an x-axis in the positive direction and a y-axis in the positive direction in a two-dimensional coordinate system, a coordinate position of an upper left corner of an icon 2 on the screen of the terminal is (40, 10), a coordinate position of the icon 2 on the display control is (10, 200), and a coordinate mapping relationship between the foregoing two coordinates in the same two-dimensional coordinate system is first established. When the user enters a single-tap instruction on the upper left corner of the icon 2 on the display control, first entered coordinates (10, 200) of the single-tap instruction are acquired. Mapped coordinates, that is, second entered coordinates (40, 10), of the first entered coordinates (10, 200) are determined in the display interface of the screen of the terminal according to the previously established coordinate mapping relationship, where the second entered coordinates are also corresponding to the upper left corner of the icon 2 in the display interface of the screen of the terminal. Finally, the single-tap instruction is performed at the second entered coordinates, so as to complete transfer of the single-tap instruction, implement a single-tap operation on the icon 2, and open an application program corresponding to the icon 2.

It should be noted that in the process of transmitting the operation instruction shown in FIG. 5 in this embodiment, coordinate mapping between the display interface loaded onto the display control and the display interface of the screen of the terminal may be performed on coordinates of a single point or on a set of coordinates of a string of points. For example, when the operation instruction is an instruction triggered by a flicking gesture, coordinates of a string of points can be collected according to a flicking track of the flicking gesture, and coordinate mapping needs to be separately performed on the coordinates of the string of points, so as to complete transfer of the operation instruction triggered by the flicking gesture.

Further, the foregoing display control may change, according to an actual usage requirement and by using a functional operation such as switching or zooming, the display interface loaded onto the display control into a display interface of any area on the screen of the terminal. Details are described in the following with related embodiments.

First, for a switch operation, a switch instruction entered by the user on the display control is acquired, and the display interface that is of the second screen area and is loaded onto the display control is switched to a display interface of a third screen area according to the switch instruction.

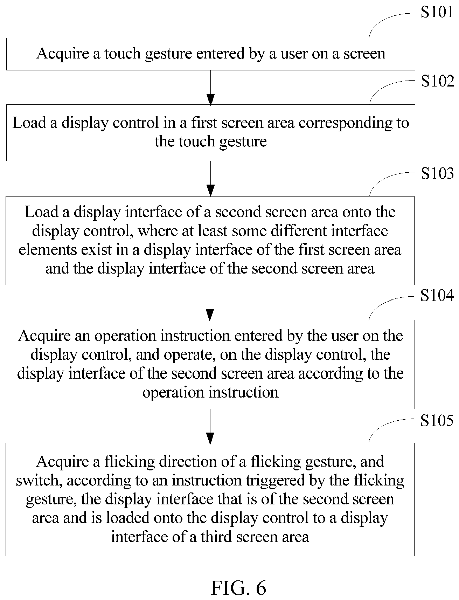

In an embodiment of the present invention, the switch instruction includes an instruction triggered by a flicking gesture. As shown in FIG. 6, after S104, the method further includes the following step:

In S105, acquire a flicking direction of the flicking gesture, and switch, according to the instruction triggered by the flicking gesture, the display interface that is of the second screen area and is loaded onto the display control to the display interface of the third screen area.

The display interface of the third screen area is a preset interface, in the flicking direction, of the display interface of the second screen area.

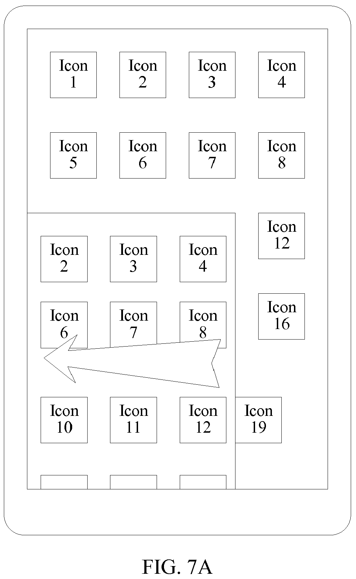

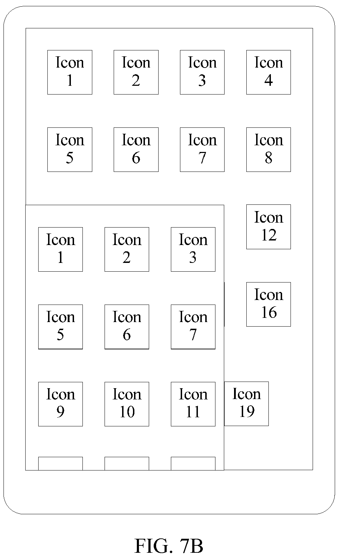

That is, in this embodiment, the display interface loaded onto the display control may be switched by using the instruction triggered by the flicking gesture, where the flicking touch gesture includes but is not limited to leftward flicking, rightward flicking, upward flicking, or downward flicking, and the flicking direction of the flicking gesture can be determined by acquiring starting position coordinates and ending position coordinates of the flicking gesture on the screen of the terminal, that is, according to a direction vector formed by the two coordinates. In an implementation example in this embodiment, for example, four areas located on the upper left corner, the upper right corner, the lower left corner, and the lower right corner of the screen of the terminal are respectively named an area 1, an area 2, an area 3, and an area 4. As shown in FIG. 7A, a display interface of the area 2 on the screen of the terminal is currently displayed on the display control. By entering a flicking gesture of leftward flicking, as shown in FIG. 7B, the display interface on the display control may be switched to a display interface of the area 1 that is adjacent to and on a left side of the area 2. Likewise, in a case not shown in FIG. 7B, by entering a flicking touch gesture of downward flicking, the display interface on the display control may be switched to a display interface of the area 4 that is adjacent to and below the area 2.

It should be noted that, the case shown in FIG. 7A is used as an example. Because the area 2 is an area on the rightmost side of the screen of the terminal, in a possible implementation manner, by entering a flicking gesture of rightward flicking on the display control, it can also be implemented that the display interface on the display control is switched to a display interface of a screen area (that is, the area 1) on the leftmost side of the terminal, and cyclic switching of screen areas is implemented.

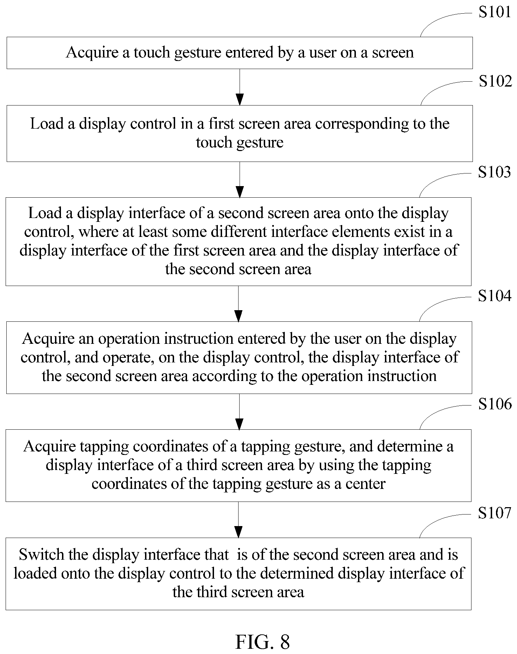

In another embodiment of the present invention, the switch instruction includes an instruction triggered by a tapping gesture. As shown in FIG. 8, after S104, the method further includes the following steps:

In S801, acquire tapping coordinates of the tapping gesture, and determine a display interface of the third screen area by using the tapping coordinates of the tapping gesture as a center.

In S802, switch the display interface that is of the second screen area and is loaded onto the display control to the determined display interface of the third screen area.

That is, in this embodiment, the display interface loaded onto the display control may be switched by using the instruction triggered by the tapping gesture. The tapping gesture includes but is not limited to a single-tap, a double-tap, or a triple-tap. For example, if a tapping gesture is acquired on an icon 7 on the display control in FIG. 7B, a display interface of a third screen area in which the icon 7 is used as a center is first determined, and then the display interface of the third screen area is loaded onto the display control to complete switching of a display interface on the display control. In this case, the display interface on the display control is switched back to the display interface shown in FIG. 7A. It should be noted that in the foregoing switch manner, by default, a size of a screen area corresponding to a display interface loaded onto the display control is unchanged.

Compared with the method for switching, by using a flicking gesture, a display interface loaded onto the display control, in the method provided in this embodiment, there is no need to use a flicking gesture to successively switch a display interface loaded onto the display control to a display interface of an adjacent area, a center of a display interface that needs to be loaded may be directly determined, and then the display interface loaded onto the display control is switched to a display interface of another area on the screen of the terminal.

Second, for a zooming operation, a zoom-out or zoom-in instruction entered by the user on the display control is acquired to implement zoom-out or zoom-in of the display interface loaded onto the display control.

Specifically, when the user enters the zoom-out instruction on the display control, after S104, the method further includes:
acquiring the zoom-out instruction entered by the user on the display control; and
switching, according to the zoom-out instruction, the display interface that is of the second screen area and is loaded onto the display control to a display interface of a fourth screen area, where the display interface of the fourth screen area includes interface elements in the display interface of the second screen area, and a quantity of interface elements in the display interface of the fourth screen area is greater than a quantity of interface elements in the display interface of the second screen area.

Alternatively, when the user enters the zoom-in instruction on the display control, after S104, the method further includes:
acquiring the zoom-in instruction entered by the user on the display control; and
switching, according to the zoom-in instruction, the display interface that is of the second screen area and is loaded onto the display control to a display interface of a fifth screen area, where the display interface of the fifth screen area includes a part of interface elements in the display interface of the second screen area.

The zoom-out instruction may be triggered by using an acquired pinch gesture entered by the user on the screen of the terminal, or may be triggered by using an acquired tapping gesture performed by the user on a preset function key. Likewise, the zoom-in instruction may be triggered by using an acquired stretch gesture entered by the user on the screen of the terminal, or may be triggered by using an acquired tapping gesture performed by the user on a preset function key.

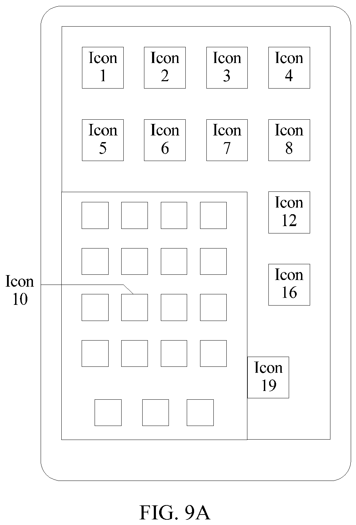

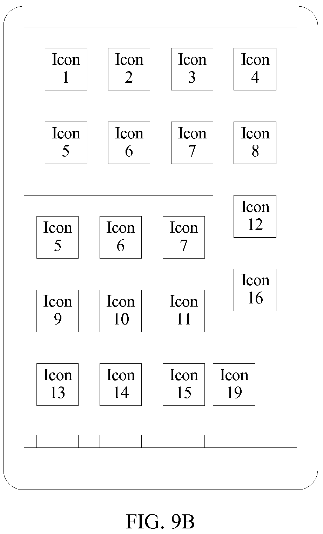

A change status, triggered by the zoom-out instruction and the zoom-in instruction, of the display interface loaded onto the display control is described in the following with examples by using FIG. 9A and FIG. 9B.

For example, based on the screen of the terminal shown in FIG. 7B, a zoom-out instruction entered by the user on the display control is first acquired, and a display interface of the entire screen of the terminal shown in FIG. 9A is loaded onto the display control, which implements zoom-out display of all interface elements in the display interface loaded onto the display control. Obviously, the display interface loaded onto the display control in FIG. 9A includes all interface elements on the display control in FIG. 7B, and because zoom-out display is performed on the interface elements, a quantity of interface elements included in the display control in FIG. 9A is greater than a quantity of interface elements included in the display control in FIG. 7B. Then, a zoom-in instruction entered by the user on an icon 10 displayed on the display control in FIG. 9A is acquired, and zoom-in display is performed on the interface elements in the display interface loaded onto the display control. As shown in FIG. 9B, the display interface loaded onto the display control is switched to a display interface in which the icon 10 is used as a center. Obviously, the display control in FIG. 9B includes only a part of the interface elements on the display control in FIG. 9A.

By using the foregoing zoom-out or zoom-in operation in the display interface loaded onto the display control, the display interface loaded onto the display control can be randomly switched to a display interface in any area on the screen of the terminal, thereby, avoiding a case of misoperation caused by a limitation of an operable area because some icons are located on an edge of the display control.

In this embodiment of the present invention, a display interface of another screen area except a partial area on a screen of a terminal is loaded and displayed in the partial area, so that an operation for the entire screen of the terminal is implemented by using the partial area. According to this embodiment of the present invention, touch operation efficiency on the terminal can be effectively improved in a scenario in which a user operates and controls a large-screen terminal by using one hand.

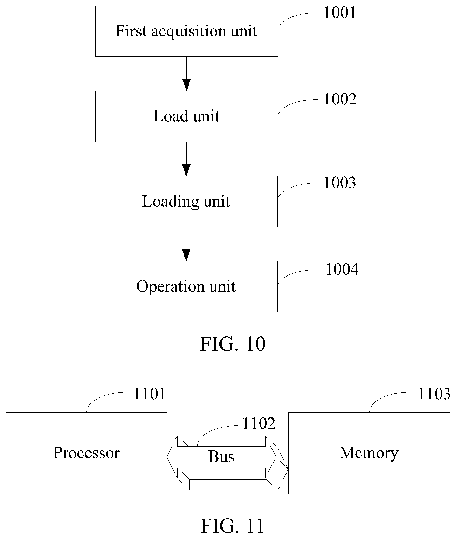

FIG. 10 shows a structural block diagram of a touch operation apparatus for a terminal according to an embodiment of the present invention. The apparatus may be located on a terminal device, including a mobile phone, a tablet, a personal digital assistant, and the like, that can be operated and controlled by receiving an instruction by means of a touchscreen, and is configured to execute the touch operation method for the terminal in the embodiment of the present invention in FIG. 1 to FIG. 9. For ease of description, only a part related to this embodiment is shown.

Referring to FIG. 10, the apparatus includes:
a first acquisition unit 1001, configured to acquire a touch gesture entered by a user on a screen;
a load unit 1002, configured to: receive the touch gesture acquired by the first acquisition unit, and load a display control in a first screen area corresponding to the touch gesture;
a loading unit 1003, configured to load a display interface of a second screen area onto the display control loaded by the load unit 1002, where at least some different interface elements exist in display interfaces of different screen areas; and
an operation unit 1004, configured to: acquire an operation instruction entered by the user on the display control, and operate, on the display control, the display interface of the second screen area according to the operation instruction.

Optionally, the load unit 1002 is further configured to:
load a function key related to the display control on the screen.

Optionally, the apparatus further includes:
a second acquisition unit, configured to acquire a switch instruction entered by the user on the display control; and
a switch unit, configured to: receive the switch instruction acquired by the second acquisition unit, and switch, according to the switch instruction, the display interface that is of the second screen area and is loaded onto the display control to a display interface of a third screen area.

Optionally, the switch instruction includes an instruction triggered by a flicking gesture, and the switch unit is specifically configured to:
acquire a flicking direction of the flicking gesture, and switch the display interface that is of the second screen area and is loaded onto the display control to the display interface of the third screen area.

The display interface of the third screen area is an interface, in the flicking direction, adjacent to the display interface of the second screen area.

Optionally, the switch instruction includes an instruction triggered by a tapping gesture, and the switch unit is specifically configured to:
acquire tapping coordinates of the tapping gesture, and determine the display interface of the third screen area by using the tapping coordinates of the tapping gesture as a center; and
switch the display interface that is of the second screen area and is loaded onto the display control to the determined display interface of the third screen area.

Optionally, the apparatus further includes:
a third acquisition unit, configured to acquire a zoom-out instruction entered by the user on the display control; and
a zoom-out unit, configured to switch, according to the zoom-out instruction, the display interface that is of the second screen area and is loaded onto the display control to a display interface of a fourth screen area, where the display interface of the fourth screen area includes interface elements in the display interface of the second screen area, and a quantity of interface elements in the display interface of the fourth screen area is greater than a quantity of interface elements in the display interface of the second screen area; or the apparatus further includes:
   a fourth acquisition unit, configured to acquire a zoom-in instruction entered by the user on the display control; and
   a zoom-in unit, configured to switch, according to the zoom-in instruction, the display interface that is of the second screen area and is loaded onto the display control to a display interface of a fifth screen area, where the display interface of the fifth screen area includes only a part of interface elements in the display interface of the second screen area.

Optionally, the operation unit 1004 is specifically configured to:
establish a coordinate mapping relationship between the display interface of the second screen area and a display interface of the screen;
acquire the operation instruction entered by the user on the display control, and determine first entered coordinates, in the display interface of the second screen area, of the operation instruction;
determine second entered coordinates in the display interface of the screen according to the coordinate mapping relationship and the first entered coordinates; and
execute the operation instruction at the second entered coordinates in the display interface of the screen.

Optionally, the load unit 1002 is specifically configured to:
determine a type of the touch gesture according to a preset gesture rule, where the type of the touch gesture includes a left-hand touch gesture and a right-hand touch gesture;
determine the first screen area on the screen according to the type of the touch gesture, where the first screen area is located in an area, on the screen, on a same side of the type of the touch gesture; and
load the display control in the determined first screen area.

FIG. 11 shows a structural block diagram of hardware of a touch operation apparatus for a terminal according to an embodiment of the present invention. The apparatus may be located on a terminal device, including a mobile phone, a tablet, a personal digital assistant, and the like, that can be operated and controlled by receiving an instruction by means of a touchscreen, and is configured to execute the touch operation method for the terminal in the embodiment of the present invention in FIG. 1 to FIG. 9. For ease of description, only a part related to this embodiment is shown.

Referring to FIG. 11, the apparatus includes:
a processor 1101, a memory 1102, and a bus 1103, where the processor 1101 and the memory 1102 communicate with each other by using the bus 1103, the memory 1102 is configured to store a program, and the processor 1101 is configured to execute the program stored in the memory 1102, where when the program is executed, the processor is configured to:
   acquire a touch gesture entered by a user on a screen;
   load a display control in a first screen area corresponding to the touch gesture;
   load a display interface of a second screen area onto the display control, where at least some different interface elements exist in a display interface of the first screen area and the display interface of the second screen area; and
   acquire an operation instruction entered by the user on the display control, and operate, on the display control, the display interface of the second screen area according to the operation instruction.

Optionally, that the processor loads the display control in the first screen area corresponding to the touch gesture includes: loading a function key related to the display control on the screen.

Optionally, the processor is further configured to:
acquire a switch instruction entered by the user on the display control; and
switch, according to the switch instruction, the display interface that is of the second screen area and is loaded onto the display control to a display interface of a third screen area.

Optionally, the switch instruction includes an instruction triggered by a flicking gesture, and that the processor switches, according to the switch instruction, the display interface that is of the second screen area and is loaded onto the display control to the display interface of the third screen area includes: the processor is configured to: acquire a flicking direction of the flicking gesture; and
switch, according to the instruction triggered by the flicking gesture, the display interface that is of the second screen area and is loaded onto the display control to the display interface of the third screen area, where the display interface of the third screen area is a preset interface, in the flicking direction, of the display interface of the second screen area.

Optionally, the switch instruction includes an instruction triggered by a tapping gesture, and that the processor switches, according to the switch instruction, the display interface that is of the second screen area and is loaded onto the display control to the display interface of the third screen area includes: the processor is configured to: acquire tapping coordinates of the tapping gesture, and determine the display interface of the third screen area by using the tapping coordinates of the tapping gesture as a center; and
switch the display interface that is of the second screen area and is loaded onto the display control to the determined display interface of the third screen area.

Optionally, the processor is further configured to:
acquire the zoom-out instruction entered by the user on the display control; and
switch, according to the zoom-out instruction, the display interface that is of the second screen area and is loaded onto the display control to a display interface of a fourth screen area, where the display interface of the fourth screen area includes interface elements in the display interface of the second screen area, and a quantity of interface elements in the display interface of the fourth screen area is greater than a quantity of interface elements in the display interface of the second screen area; or
the processor is further configured to:
   acquire the zoom-in instruction entered by the user on the display control; and
   switch, according to the zoom-in instruction, the display interface that is of the second screen area and is loaded onto the display control to a display interface of a fifth screen area, where the display interface of the fifth screen area includes a part of interface elements in the display interface of the second screen area.

Optionally, that the processor acquires the operation instruction entered by the user on the display control, and operates, on the display control, the display interface of the second screen area according to the operation instruction includes:
the processor is configured to: establish a coordinate mapping relationship between the display interface loaded onto the display control and a display interface of the screen; acquire the operation instruction entered by the user on the display control, and determine first entered coordinates, in the display interface loaded onto the display control, of the operation instruction; determine second entered coordinates in the display interface of the screen according to the coordinate mapping relationship and the first entered coordinates; and execute the operation instruction at the second entered coordinates in the display interface of the screen.

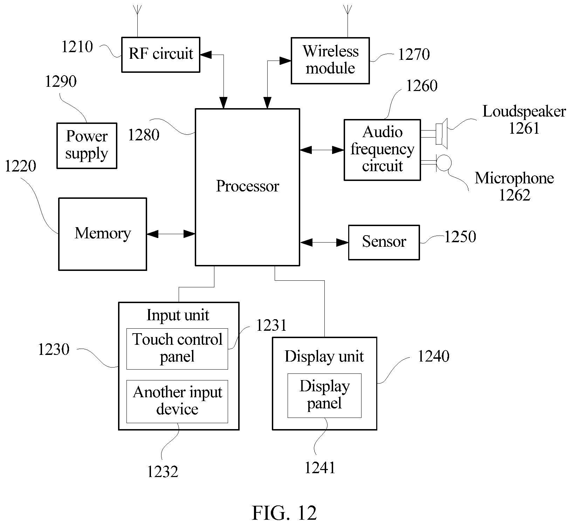

FIG. 12 shows a block diagram of a partial structure of a mobile phone related to a terminal according to this embodiment of the present invention. Referring to FIG. 12, the mobile phone includes components such as a radio frequency (Radio Frequency, RF) circuit 1210, a memory 1220, an input unit 1230, a display unit 1240, a sensor 1250, an audio frequency circuit 1260, a wireless module 1270, a processor 1280, and a power supply 1290. A person skilled in the art may understand that the structure of the mobile phone shown in FIG. 12 constitutes no limitation on the mobile phone. The mobile phone may include more or fewer parts than those shown in FIG. 12, or a combination of some parts, or parts disposed differently.

The following describes the constituent parts of the mobile phone in detail with reference to FIG. 12.

The RF circuit 1210 may be configured to: receive and send information or receive and send a signal during a call. Specifically, after receiving downlink information of abase station, the RF circuit 1210 sends the downlink information to the processor 1280 for processing. In addition, the RF circuit 1210 sends uplink data to the base station. Generally, the RF circuit includes but is not limited to an antenna, at least one amplifier, a transceiver, a coupler, a low noise amplifier (Low Noise Amplifier, LNA), a duplexer, and the like. Moreover, the RF circuit 1210 may further communicate with a network and another device by means of wireless communication. The wireless communication may use any communication standard or protocol, which includes but is not limited to Global System for Mobile Communications (Global System of Mobile communication, GSM), general packet radio service (General Packet Radio Service, GPRS), Code Division Multiple Access (Code Division Multiple Access, CDMA), Wideband Code Division Multiple Access (Wideband Code Division Multiple Access, WCDMA), Long Term Evolution (Long Term Evolution, LTE), email, short message service (Short Messaging Service, SMS), and the like.

The memory 1220 may be configured to store a software program and a module. The processor 1280 executes various function applications and data processing of the mobile phone by running the software program and the module that are stored in the memory 1220. The memory 1220 may mainly include a program storage area and a data storage area, where an operating system, an application program needed by at least one function (such as a sound playing function and an image playing function), and the like may be stored in the program storage area, and data (such as audio data and an address book) created according to usage of the mobile phone may be stored in the data storage area. In addition, the memory 1220 may include a high-speed random access memory, and may further include a non-volatile memory, for example, at least one magnetic disk storage, a flash memory, or another volatile solid-state memory.

The input unit 1230 may be configured to receive input digital or character information, and generate key signal input related to a setting of a user and function control of the mobile phone 1200. Specifically, the input unit 1230 may include a touch control panel 1231 and another input device 1232. The touch control panel 1231 is also referred to as a touchscreen, and can collect a touching operation (for example, an operation performed by the user on the touch control panel 1231 or near the touch control panel 1231 by using any appropriate object or accessory such as a finger or a stylus) performed by the user on or near the touch control panel 1231, and drive a corresponding connecting apparatus according to a preset program. Optionally, the touch control panel 1231 may include two parts: a touch detection apparatus and a touch controller. The touch detection apparatus detects a touch direction of the user, detects a signal brought by the touch operation, and sends the signal to the touch controller. The touch controller receives touch information from the touch detection apparatus, transforms the touch information to contact coordinates, sends the contact coordinates to the processor 1280, and can receive a command sent by the processor 1280 and execute the command. In addition, the touch control panel 1231 may be implemented by using various types such as a resistive type, a capacitive type, an infrared ray, and a surface acoustic wave. In addition to the touch control panel 1231, the input unit 1230 may further include another input device 1232. Specifically, another input device 1232 may include but is not limited to one or multiple of a physical keyboard, a function key (for example, a volume control key and a switch key), a trackball, a mouse device, an operating rod, and the like.

The display unit 1240 may be configured to display information entered by the user or information provided for the user, and various menus of the mobile phone. The display unit 1240 may include a display panel 1241. Optionally, the display panel 1241 may be configured in a form of a liquid crystal display (Liquid Crystal Display, LCD), an organic light-emitting diode (Organic Light-Emitting Diode, OLED), and the like. Further, the touch control panel 1231 may cover the display panel 1241, and when detecting a touch operation performed on or near the touch control panel 1231, the touch control panel 1231 transmits the touch operation to the processor 1280, so as to determine a type of a touch event. Then, the processor 880 provides corresponding visual output on the display panel 1241 according to the type of the touch event. Although in FIG. 12, the touch control panel 1231 and the display panel 1241 serve as two independent components to implement input and output functions of the mobile phone, in some embodiments, the touch control panel 1231 and the display panel 1241 may be integrated to implement the input and output functions of the mobile phone.

The mobile phone 1200 may further include at least one type of sensor 1250, such as an optical sensor, a motion sensor, and another sensor. Specifically, the optical sensor may include an ambient light sensor and a proximity sensor. The ambient light sensor may adjust luminance of the display panel 1241 according to brightness of ambient light, and the proximity sensor may close the display panel 1241 and/or backlight when the mobile phone moves to an ear. As a motion sensor, an accelerometer sensor can detect a value of acceleration in each direction (generally, three axes), can detect a value and a direction of the gravity in a static mode, and can be used for an application that identifies a mobile phone posture (such as screen switching between landscape and portrait, related games, and magnetometer posture calibration), a function related to vibration identification (such as a pedometer or a knock), and the like. For a gyroscope, a barometer, a hygrometer, a thermometer, an infrared sensor, and other sensors that may further be disposed on the mobile phone, details are not described herein again.

The audio frequency circuit 1260, a loudspeaker 1261, and a microphone 1262 may provide an audio interface between a user and the mobile phone. The audio frequency circuit 1260 can send, to the loudspeaker 1261, an electrical signal converted from received audio data, and then the loudspeaker 1261 converts the electrical signal into a sound signal for outputting. The microphone 1262 converts a collected sound signal into an electrical signal, and then the audio frequency circuit 1260 receives the electrical signal and converts the electrical signal into audio frequency data, and outputs the audio frequency data to the processor 1280 for processing. Then the audio frequency data is sent through the RF circuit 1210 to, for example, another mobile phone, or is output to the memory 1220 for further processing.

A wireless module is based on a short-range wireless transmission technology. By using the wireless module 1270, the mobile phone can help the user receive and send an email, browse a web page, access streaming media, and the like, and the wireless module 1270 provides wireless broadband Internet access for the user. Although FIG. 12 shows the wireless module 1270, it may be understood that, the wireless module 1270 is not a necessary part of the mobile phone 1200, and may be omitted according to a requirement within a scope in which an essence of the present invention is not changed.

The processor 1280 is a control center of the mobile phone, uses various interfaces and lines to connect to various parts of the entire mobile phone, and executes various functions of the mobile phone and processes data by running or executing the software program and/or the module that are/is stored in the memory 1220 and by invoking data stored in the memory 1220, so as to perform overall monitoring on the mobile phone. Optionally, the processor 1280 may include one or multiple processing units. Preferably, the processor 1280 may be integrated with an application processor and a modem processor, where the application processor mainly processes an operating system, a user interface, an application program, and the like, and the modem processor mainly processes wireless communications. It may be understood that, the foregoing modem processor may not be integrated in the processor 1280 either.

The mobile phone 1200 further includes the power supply 1290 (for example, a battery) that supplies power to various components. Preferably, the power supply may be logically connected to the processor 1280 by using a power management system, so as to implement functions such as charging, discharging, and power consumption management by using the power management system.

The mobile phone 1200 may further include a camera, a Bluetooth module, and the like that are not shown in FIG. 12, which are not described herein.

In this embodiment of the present invention, the processor 1280 included in the terminal further has the following functions, and a touch operation method for the terminal includes:
acquiring a touch gesture entered by a user on a screen;
loading a display control in a first screen area corresponding to the touch gesture;
loading a display interface of a second screen area onto the display control, where at least some different interface elements exist in display interfaces of different screen areas; and
acquiring an operation instruction entered by the user on the display control, and operating, on the display control, the display interface of the second screen area according to the operation instruction.

Further, the loading a display control in a first screen area corresponding to the touch gesture further includes:
loading a function key related to the display control on the screen.

Further, the method further includes:
acquiring a switch instruction entered by the user on the display control; and
switching, according to the switch instruction, the display interface that is of the second screen area and is loaded onto the display control to a display interface of a third screen area.

Further, the switch instruction includes an instruction triggered by a flicking gesture, and the switching, according to the switch instruction, the display interface that is of the second screen area and is loaded onto the display control to a display interface of a third screen area includes:
acquiring a flicking direction of the flicking gesture, and switching the display interface that is of the second screen area and is loaded onto the display control to the display interface of the third screen area.

The display interface of the third screen area is an interface, in the flicking direction, adjacent to the display interface of the second screen area.

Further, the switch instruction includes an instruction triggered by a tapping gesture, and the switching, according to the switch instruction, the display interface that is of the second screen area and is loaded onto the display control to a display interface of a third screen area includes:
acquiring tapping coordinates of the tapping gesture, and determining the display interface of the third screen area by using the tapping coordinates of the tapping gesture as a center; and
switching the display interface that is of the second screen area and is loaded onto the display control to the determined display interface of the third screen area.

Further, the method further includes:
acquiring a zoom-out instruction entered by the user on the display control; and
switching, according to the zoom-out instruction, the display interface that is of the second screen area and is loaded onto the display control to a display interface of a fourth screen area, where the display interface of the fourth screen area includes interface elements in the display interface of the second screen area, and a quantity of interface elements in the display interface of the fourth screen area is greater than a quantity of interface elements in the display interface of the second screen area; or
acquiring a zoom-in instruction entered by the user on the display control; and
switching, according to the zoom-in instruction, the display interface that is of the second screen area and is loaded onto the display control to a display interface of a fifth screen area, where the display interface of the fifth screen area includes only a part of interface elements in the display interface of the second screen area.

Further, the acquiring an operation instruction entered by the user on the display control, and operating, on the display control, the display interface of the second screen area according to the operation instruction includes:
establishing a coordinate mapping relationship between the display interface of the second screen area and a display interface of the screen;
acquiring the operation instruction entered by the user on the display control, and determining first entered coordinates, in the display interface of the second screen area, of the operation instruction;
determining second entered coordinates in the display interface of the screen according to the coordinate mapping relationship and the first entered coordinates; and
executing the operation instruction at the second entered coordinates in the display interface of the screen.

Further, the loading a display control in a first screen area corresponding to the touch gesture includes:
determining a type of the touch gesture according to a preset gesture rule, where the type of the touch gesture includes a left-hand touch gesture and a right-hand touch gesture;
determining the first screen area on the screen according to the type of the touch gesture, where the first screen area is located in an area, on the screen, on a same side of the type of the touch gesture; and
loading the display control in the determined first screen area.

In this embodiment of the present invention, an operation interface of another area except a partial area on a screen of a terminal is loaded and displayed in the partial area, so that an operation for the entire screen of the terminal is implemented by using the partial area. According to this embodiment of the present invention, touch operation efficiency on the terminal can be effectively improved in a scenario in which a user operates and controls a large-screen terminal by using one hand.

The foregoing descriptions are merely exemplary embodiments of the present invention, but are not intended to limit the present invention. Any modification, equivalent replacement, or improvement made without departing from the spirit and principle of the present invention should fall within the protection scope of the present invention.

## Claims

1. A touch operation method for a terminal, comprising:
acquiring a touch gesture entered by a user on a screen;
loading a display control in a first screen area corresponding to the touch gesture;
loading a display interface of a second screen area onto the display control, wherein at least some different interface elements exist in a display interface of the first screen area and the display interface of the second screen area; and
acquiring an operation instruction entered by the user on the display control, and operating, on the display control, the display interface of the second screen area according to the operation instruction.

2. The method according to claim 1, wherein the loading a display control in a first screen area corresponding to the touch gesture further comprises:
loading a function key related to the display control on the screen.

3. The method according to claim 1 or 2, wherein the method further comprises:
acquiring a switch instruction entered by the user on the display control; and
switching, according to the switch instruction, the display interface that is of the second screen area and is loaded onto the display control to a display interface of a third screen area.

4. The method according to claim 3, wherein the switch instruction comprises an instruction triggered by a flicking gesture, and the switching, according to the switch instruction, the display interface that is of the second screen area and is loaded onto the display control to a display interface of a third screen area comprises:
acquiring a flicking direction of the flicking gesture; and
switching, according to the instruction triggered by the flicking gesture, the display interface that is of the second screen area and is loaded onto the display control to the display interface of the third screen area, wherein the display interface of the third screen area is a preset interface, in the flicking direction, of the display interface of the second screen area.

5. The method according to claim 3, wherein the switch instruction comprises an instruction triggered by a tapping gesture, and the switching, according to the switch instruction, the display interface that is of the second screen area and is loaded onto the display control to a display interface of a third screen area comprises:
acquiring tapping coordinates of the tapping gesture, and determining the display interface of the third screen area by using the tapping coordinates of the tapping gesture as a center; and
switching the display interface that is of the second screen area and is loaded onto the display control to the determined display interface of the third screen area.

6. The method according to claim 1 or 2, wherein the method further comprises:
acquiring a zoom-out instruction entered by the user on the display control; and
switching, according to the zoom-out instruction, the display interface that is of the second screen area and is loaded onto the display control to a display interface of a fourth screen area, wherein the display interface of the fourth screen area comprises interface elements in the display interface of the second screen area, and a quantity of interface elements in the display interface of the fourth screen area is greater than a quantity of interface elements in the display interface of the second screen area; or
acquiring a zoom-in instruction entered by the user on the display control; and
switching, according to the zoom-in instruction, the display interface that is of the second screen area and is loaded onto the display control to a display interface of a fifth screen area, wherein the display interface of the fifth screen area comprises a part of interface elements in the display interface of the second screen area.

7. The method according to any one of claims 1 to 6, wherein the acquiring an operation instruction entered by the user on the display control, and operating, on the display control, the display interface of the second screen area according to the operation instruction comprises:
establishing a coordinate mapping relationship between the display interface loaded onto the display control and a display interface of the screen;
acquiring the operation instruction entered by the user on the display control, and determining first entered coordinates, in the display interface loaded onto the display control, of the operation instruction;
determining second entered coordinates in the display interface of the screen according to the coordinate mapping relationship and the first entered coordinates; and
executing the operation instruction at the second entered coordinates in the display interface of the screen.

8. A touch operation apparatus for a terminal, comprising:
a first acquisition unit, configured to acquire a touch gesture entered by a user on a screen;
a load unit, configured to load a display control in a first screen area corresponding to the touch gesture;
a loading unit, configured to load a display interface of a second screen area onto the display control, wherein at least some different interface elements exist in a display interface of the first screen area and the display interface of the second screen area; and
an operation unit, configured to: acquire an operation instruction entered by the user on the display control, and operate, on the display control, the display interface of the second screen area according to the operation instruction.

9. The apparatus according to claim 8, wherein the load unit is further configured to:
load a function key related to the display control on the screen.

10. The apparatus according to claim 8 or 9, wherein the apparatus further comprises:
a second acquisition unit, configured to acquire a switch instruction entered by the user on the display control; and
a switch unit, configured to switch, according to the switch instruction, the display interface that is of the second screen area and is loaded onto the display control to a display interface of a third screen area.

11. The apparatus according to claim 10, wherein the switch instruction comprises an instruction triggered by a flicking gesture, and the switch unit is specifically configured to:
acquire a flicking direction of the flicking gesture; and
switch, according to the instruction triggered by the flicking gesture, the display interface that is of the second screen area and is loaded onto the display control to the display interface of the third screen area, wherein the display interface of the third screen area is a preset interface, in the flicking direction, of the display interface of the second screen area.

12. The apparatus according to claim 10, wherein the switch instruction comprises an instruction triggered by a tapping gesture, and the switch unit is specifically configured to:
acquire tapping coordinates of the tapping gesture, and determine the display interface of the third screen area by using the tapping coordinates of the tapping gesture as a center; and
switch the display interface that is of the second screen area and is loaded onto the display control to the determined display interface of the third screen area.

13. The apparatus according to claim 8 or 9, wherein the apparatus further comprises:
a third acquisition unit, configured to acquire a zoom-out instruction entered by the user on the display control; and
a zoom-out unit, configured to switch, according to the zoom-out instruction, the display interface that is of the second screen area and is loaded onto the display control to a display interface of a fourth screen area, wherein the display interface of the fourth screen area comprises interface elements in the display interface of the second screen area, and a quantity of interface elements in the display interface of the fourth screen area is greater than a quantity of interface elements in the display interface of the second screen area; or the apparatus further comprises:
a fourth acquisition unit, configured to acquire a zoom-in instruction entered by the user on the display control; and
a zoom-in unit, configured to switch, according to the zoom-in instruction, the display interface that is of the second screen area and is loaded onto the display control to a display interface of a fifth screen area, wherein the display interface of the fifth screen area comprises only a part of interface elements in the display interface of the second screen area.

14. The apparatus according to any one of claims 8 to 13, wherein the operation unit is specifically configured to:
establish a coordinate mapping relationship between the display interface of the second screen area and a display interface of the screen;
acquire the operation instruction entered by the user on the display control, and determine first entered coordinates, in the display interface of the second screen area, of the operation instruction;
determine second entered coordinates in the display interface of the screen according to the coordinate mapping relationship and the first entered coordinates; and
execute the operation instruction at the second entered coordinates in the display interface of the screen.

15. A touch operation apparatus for a terminal, comprising a processor, a memory, and a bus; wherein the processor and the memory communicate with each other by using the bus, the memory is configured to store a program, and the processor is configured to execute the program stored in the memory, wherein when the program is being executed, the processor is configured to:
acquire a touch gesture entered by a user on a screen;
load a display control in a first screen area corresponding to the touch gesture;
load a display interface of a second screen area onto the display control, wherein at least some different interface elements exist in a display interface of the first screen area and the display interface of the second screen area; and
acquire an operation instruction entered by the user on the display control, and operate, on the display control, the display interface of the second screen area according to the operation instruction.

16. The apparatus according to claim 15, wherein that the processor is configured to load the display control in the first screen area corresponding to the touch gesture, comprises:
the processor is configured to load a function key related to the display control on the screen.

17. The apparatus according to claim 15 or 16, where the processor is further configured to:
acquire a switch instruction entered by the user on the display control; and
switch, according to the switch instruction, the display interface that is of the second screen area and is loaded onto the display control to a display interface of a third screen area.

18. The apparatus according to claim 17, wherein the switch instruction comprises an instruction triggered by a flicking gesture, and that the processor is configured to switch, according to the switch instruction, the display interface that is of the second screen area and is loaded onto the display control to the display interface of the third screen area, comprises:
the processor is configured to: acquire a flicking direction of the flicking gesture; and switch, according to the instruction triggered by the flicking gesture, the display interface that is of the second screen area and is loaded onto the display control to the display interface of the third screen area, wherein the display interface of the third screen area is a preset interface, in the flicking direction, of the display interface of the second screen area.

19. The apparatus according to claim 17, wherein the switch instruction comprises an instruction triggered by a tapping gesture, and that the processor switches, according to the switch instruction, the display interface that is of the second screen area and is loaded onto the display control to the display interface of the third screen area comprises:
the processor is configured to: acquire tapping coordinates of the tapping gesture, and determine the display interface of the third screen area by using the tapping coordinates of the tapping gesture as a center; and switch the display interface that is of the second screen area and is loaded onto the display control to the determined display interface of the third screen area.

20. The apparatus according to claim 15 or 16, wherein the processor is further configured to:
acquire a zoom-out instruction entered by the user on the display control; and
switch, according to the zoom-out instruction, the display interface that is of the second screen area and is loaded onto the display control to a display interface of a fourth screen area, wherein the display interface of the fourth screen area comprises interface elements in the display interface of the second screen area, and a quantity of interface elements in the display interface of the fourth screen area is greater than a quantity of interface elements in the display interface of the second screen area; or
the processor is further configured to:
acquire a zoom-in instruction entered by the user on the display control; and
switch, according to the zoom-in instruction, the display interface that is of the second screen area and is loaded onto the display control to a display interface of a fifth screen area, wherein the display interface of the fifth screen area comprises a part of interface elements in the display interface of the second screen area.

21. The apparatus according to any one of claims 15 to 20, wherein that the processor is configured to acquire the operation instruction entered by the user on the display control, and operate, on the display control, the display interface of the second screen area according to the operation instruction, comprises:
the processor is configured to: establish a coordinate mapping relationship between the display interface loaded onto the display control and a display interface of the screen; acquire the operation instruction entered by the user on the display control, and determine first entered coordinates, in the display interface loaded onto the display control, of the operation instruction; determine second entered coordinates in the display interface of the screen according to the coordinate mapping relationship and the first entered coordinates; and execute the operation instruction at the second entered coordinates in the display interface of the screen.
